# EUROPEAN PATENT APPLICATION

(11) **EP 4 686 814 A1**
(43) Date of publication of application: **04.02.2026**
(21) Application number: 25193593.8
(22) Date of filing: 01.08.2025
(51) Int. Cl.: F02C 3/22, F02C 7/224, F02C 7/26

(54) **CRYOGENIC FUEL START UP SYSTEM**

(30) Priority: 02.08.2024 US 202418792812
(71) Applicant: RTX Corporation, Farmington, CT 06032 (US)
(72) Inventor: EVANS, Brandon M., Farmington, 06032 (US); TERWILLIGER, Neil J., Farmington, 06032 (US)
(74) Representative: Dehns

(57) **Abstract**

An aircraft propulsion system (20) includes a core engine (25) that includes a combustor (26) where a cryogenic fuel is mixed with compressed air and ignited to generate an exhaust gas flow (74), a propulsive fan (22) that is driven by shaft power generated by the core engine, a cryogenic fuel system (62) that includes a cryogenic fuel storage tank (78) and a fuel flow path (82) for routing fuel to the combustor of the core engine, an engine start system (60) that includes a first stage (92) that generates a first quantity of thermal energy (106) for heating a first portion of fuel (102) and a second stage (94) that utilizes the heated first portion of fuel to generate a second quantity of thermal energy (108) for heating a second portion of fuel (104), wherein the second quantity of thermal energy is greater than the first quantity of thermal energy and the second portion of fuel is communicated to the core engine.

## Description

### TECHNICAL FIELD

The present invention relates generally to a start-up system for an aircraft propulsion system utilizing a cryogenic fuel.

### BACKGROUND OF THE INVENTION

Gas turbine engines typically include a compressor where inlet air is compressed, mixed with fuel, and ignited to generate a high energy gas flow. The high energy gas flow is expanded through a turbine to generate shaft power. Development of gas turbine engines includes the use of cryogenic fuels. Cryogenic fuels stored in a liquid state need to be vaporized for combustion. During engine operation, heat is produced and can be utilized to vaporize the liquid fuels. Heating of cryogenic fuels in a liquid state without access to heat generated during engine operation may require significant amounts of energy.

### SUMMARY OF THE INVENTION

An aircraft propulsion system according to an aspect of the invention, among other possible things, includes a core engine that includes a combustor where a fuel (a cryogenic fuel) is mixed with compressed air and ignited to generate an exhaust gas flow (i.e., the combustor is configured to ignite a mixture of a fuel and compressed air to generate an exhaust gas flow), a propulsive fan that is driven by shaft power generated by the core engine, a cryogenic fuel system that includes a cryogenic fuel storage tank and a fuel flow path for routing fuel to the combustor of the core engine, an engine start system that includes a first stage that generates a first quantity of thermal energy for heating a first portion of fuel and a second stage that utilizes the heated first portion of fuel to generate a second quantity of thermal energy for heating a second portion of fuel, the second quantity of thermal energy is greater than the first quantity of thermal energy and the second portion of fuel is communicated to the core engine (e.g., to the combustor).

In any of the aspects or embodiments described above or herein, fuel flow path may include a primary fuel path that directs fuel to the combustor and a secondary fuel path for directing fuel to the engine start system.

In any of the aspects or embodiments described above or herein, the aircraft propulsion system may further include a valve system for controlling fuel flow between the primary fuel path and the secondary fuel path.

In any of the aspects or embodiments described above or herein, the secondary fuel path may further include a first stage path that directs fuel to the to the first stage and a second stage path that directs fuel to the second stage.

In any of the aspects or embodiments described above or herein, the aircraft propulsion system may further include a controller that is programed to operate the valve system and the engine start system for starting the core engine.

In any of the aspects or embodiments described above or herein, the first stage may include one of an electric heater and/or a blower for heating the first portion of fuel.

In any of the aspects or embodiments described above or herein, the second stage may include one of a fuel cell, a burner, or a chemical reactor that utilizes the first portion of fuel to generate the second quantity of thermal energy.

In any of the aspects or embodiments described above or herein, any remaining portion of the first quantity of thermal energy generated in the first stage may be communicated to the second stage and utilized to heat the second portion of fuel (i.e., the system or assembly is configured to communicate any remaining portion of the first quantity of thermal energy generated in the first stage is communicated to the second stage and utilized to heat the second portion of fuel).

In any of the aspects or embodiments described above or herein, the aircraft propulsion system may further include a bottoming cycle where thermal energy from the core engine is recovered and utilized to heat a portion of fuel flow within the primary fuel path.

In any of the aspects or embodiments described above or herein, the bottoming cycle system may further include a closed circuit where a working fluid is compressed by a bottoming compressor, heated, and expanded through a turboexpander (i.e., the closed circuit is configured to compress a working fluid with a bottoming compressor, heat the working fluid, and expand the working fluid through a turboexpander (e.g., a turbine)).

In any of the aspects or embodiments described above or herein, the turboexpander may be coupled to drive the bottoming compressor.

In another aspect of the invention, a gas turbine engine assembly is provided. The gas turbine engine assembly may comprise the aircraft propulsion system of any of the aspects or embodiments described above or herein. The gas turbine engine assembly, among other possible things, includes a compressor, a combustor and a turbine coupled to an engine shaft, a mix of air and fuel is ignited in the combustor to generate an exhaust gas flow that is expanded through the main turbine to drive the engine shaft and subsequently exhausted through an exhaust nozzle (i.e., the combustor is configured to ignite a mix of air and fuel to generate an exhaust gas flow, the turbine is configured to expand the exhaust gas flow therethrough to drive the engine shaft, and an exhaust nozzle is configured to exhaust the exhaust gas flow), a propulsive fan driven by the engine shaft (e.g., a propulsive fan driven by shaft power generated by the turbine), a cryogenic fuel system that includes a cryogenic fuel storage tank and a fuel flow path for routing fuel to the combustor, an engine start system that includes a first stage generating a first quantity of thermal energy for heating a first portion of fuel and a second stage that utilizes the heated first portion of fuel to generate a second quantity of thermal energy for heating a second portion of fuel, the second quantity of thermal energy is greater than the first quantity of thermal energy and the second portion of fuel is communicated to the core engine (e.g., to the combustor). The gas turbine engine assembly may include a bottoming cycle where thermal energy is recovered and utilized to heat a portion of fuel flow within the fuel flow path (e.g., a primary fuel path), and a controller that is programed to operate the engine start system to generate a vaporized fuel flow for injection into the combustor and to turn-off the engine start system and turn-on the bottoming cycle in response to the generation of power by the turbine.

In any of the aspects or embodiments described above or herein, fuel flow path may include a primary fuel path that directs fuel to the combustor and a secondary fuel path for directing fuel to the engine start system.

In any of the aspects or embodiments described above or herein, the secondary fuel path may further include a first stage path that directs fuel to the first stage and a second stage path directing fuel to the second stage.

In any of the aspects or embodiments described above or herein, the gas turbine engine assembly may further include a valve system for controlling fuel flow between the primary fuel path and the secondary fuel path and the controller if further programmed to operate the valve system to control fuel flow through each of the primary fuel path and the secondary fuel paths.

In any of the aspects or embodiments described above or herein, the first stage may include one of an electric heater and/or a blower for heating the first portion of fuel. The second stage may include one of a fuel cell, a burner, or a chemical reactor that utilizes the first portion of fuel to generate the second quantity of thermal energy.

A method of assembling an aircraft propulsion system according to another aspect of the invention, among other possible things, includes assembling a core engine that includes a combustor where a cryogenic fuel is mixed with compressed air and ignited to generate an exhaust gas flow, assembling a propulsive fan that is configured to be driven by shaft power generated by the core engine, assembling a cryogenic fuel system to include a cryogenic fuel storage tank, and a fuel flow path for routing a cryogenic fuel to the combustor, and assembly an engine start system that includes a first stage configured to generate a first quantity of thermal energy for heating a first portion of fuel and a second stage configured to utilize the heated first portion of fuel to generate a second quantity of thermal energy for heating a second portion of fuel such that the second quantity of thermal energy is greater than the first quantity of thermal energy and the second portion of fuel is communicated to the core engine.

In any of the aspects or embodiments described above or herein, the method may further include assembling the fuel flow path to include a primary fuel path that directs fuel to the combustor and a secondary fuel path for directing fuel to the engine start system. The secondary fuel path may further include a first stage path directing fuel to the to the first stage and a second stage path directing fuel to the second stage.

In any of the aspects or embodiments described above or herein, the method may further include assembling a valve system configured to controlling fuel flow between the primary fuel path and the secondary fuel path. The method may further include assembling a controller that is programmed to operate the valve system and the engine start system to control fuel flow through each of the primary fuel path and the secondary fuel paths and assembling.

In any of the aspects or embodiments described above or herein, the method may further include assembling a bottoming cycle that is configured to recover thermal energy from the core engine and to utilize the recovered thermal energy to heat a portion of fuel flow within a primary fuel path.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example aircraft propulsion system including a cryogenic fuel system and an engine start system.
Figure 2 is a simplified schematic view of an example aircraft propulsion system including a cryogenic fuel system and an engine start system.
Figure 3, is a simplified schematic view of another example aircraft propulsion system including a cryogenic fuel system, a bottom cycle system and an engine start system.

### DETAILED DESCRIPTION

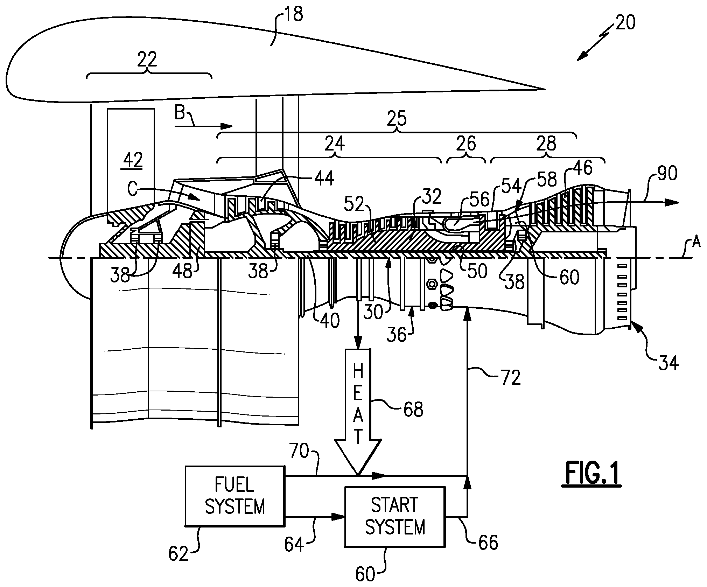

Figure 1 schematically shows an aircraft propulsion system 20 that includes a cryogenic fuel system 62 and an engine start system 60. Cryogenic fuel is stored in a liquid form at very low temperatures. Heat generated during engine operation as is schematically indicated at 68 is utilized to transform the liquid fuel into the required gaseous form. At engine start-up, heat from a source other than the engine is required to transform the fuel into the gaseous form. The engine start system 60 transforms a liquid fuel flow 64 into a gaseous fuel flow 66 that is supplied to the core engine 25. Once the core engine 25 is operating at a steady state, the engine start system 60 is turned off and heat 68 from the core engine 25 is used to transform a liquid fuel flow 70 into the gaseous fuel flow 72.

The example propulsion system 20 is disclosed as a two-spool turbofan that generally incorporates a fan section 22 and a core engine 25 that generates an exhaust gas flow for driving the fan section 22. The core engine 25 includes a compressor section 24, a combustor section 26, and a turbine section 28. The fan section 22 may include a single-stage fan having a plurality of fan blades 42. The fan blades 42 may have a fixed stagger angle or may have a variable pitch to direct incoming airflow from an engine inlet. The fan 22 drives air along a bypass flow path B defined within a nacelle 18, and also drives air along a core flow path C for compression and communication into the combustor section 26 then expansion through the turbine section 28. Exhaust gas flow is finally exhausted through a nozzle 34.

The exemplary core engine 25 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner engine shaft 40 that interconnects, a first (or low) pressure compressor 44 and a first (or low) pressure turbine 46. The inner engine shaft 40 is connected to the fan section 22 through a speed change mechanism, which in one example is illustrated as a geared architecture 48 to drive the fan section 22 at a lower speed than the low speed spool 30. The inner engine shaft 40 may interconnect the low pressure compressor 44 and low pressure turbine 46 such that the low pressure compressor 44 and low pressure turbine 46 are rotatable at a common speed and in a common direction. Although this application discloses geared architecture 48, its teaching may benefit direct drive engines having no geared architecture.

The high speed spool 32 includes an outer engine shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 58 of the engine static structure 36 may be arranged generally between the high pressure turbine 54 and the low pressure turbine 46. The mid-turbine frame 58 further supports bearing systems 38 in the turbine section 28. The inner engine shaft 40 and the outer engine shaft 50 are concentric and rotate via bearing systems 38 about the engine central longitudinal axis A which is collinear with their longitudinal axes.

Although an example engine architecture is disclosed by way of example, other turbine engine architectures are within the contemplation and scope of this disclosure. Moreover, although the disclosed non-limiting embodiment depicts a turbofan turbine engine, it should be understood that the concepts described herein are not limited to use with turbofans as the teachings may be applied to other types of turbine engines (e.g., propfan, etc.). Additionally, the features of this disclosure may be applied to other engine configurations utilized to generate shaft power.

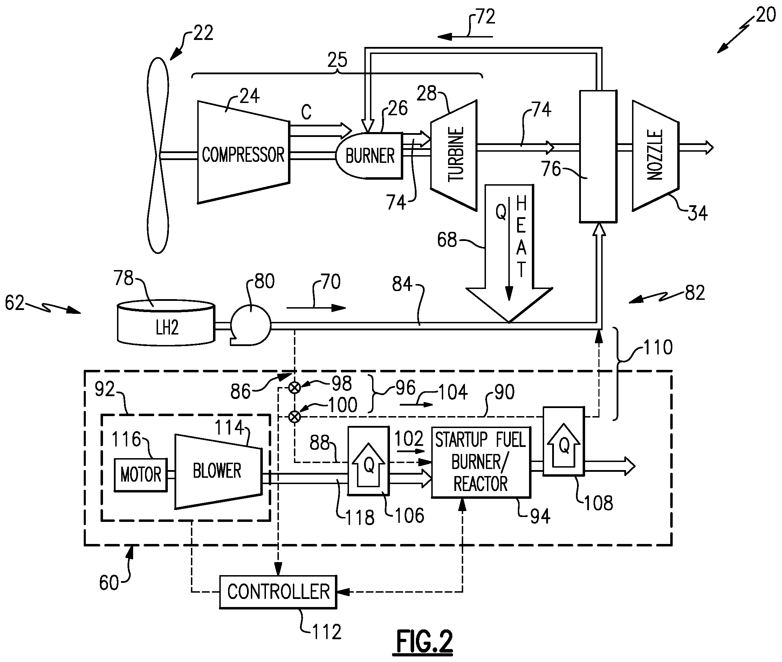

Referring to Figure 2 with continued reference to Figure 1, a simplified schematic view of the propulsion system 20 is shown. The cryogenic fuel system 62 includes at least a fuel tank 78 and a fuel pump 80 to provide the liquid fuel flow 70 to the combustor section 26 through a fuel flow path 82. The example fuel system 62 is configured to provide a hydrogen based fuel such as a liquid hydrogen (LH₂). Although hydrogen is disclosed by way of example, other cryogenic, non-carbon based fuels could be utilized and are within the contemplation of this disclosure.

The fuel tank 78 includes features for storing a cryogenic fuel at temperatures required to maintain the fuel in a liquid phase. Temperatures required to maintain the cryogenic fuel in a liquid phase may be as low as about -412°F. In one example embodiment, the cryogenic fuel is maintained at a temperature below 0 °F. In another example embodiment, the fuel is maintained in the tank 78 at temperatures below -100 °F. The cryogenic fuel may be maintained at temperatures below about -150 °F and as low as about -435 °F.

The engine start system 60 includes a first stage 92 that feeds a heated fuel flow to a second stage 94 (e.g., startup fuel burner/reactor) such that the second stage 94 may transform a quantity of fuel into a gaseous form to operate the core engine 25. The first stage 92 generates a first quantity of thermal energy 106 for heating a first portion 88 of fuel to a gaseous form. The second stage 94 uses the heated first portion 88 of fuel to generate a second quantity of thermal energy 108 to transform a second portion of fuel flow 104 in a second stage path 90 into a gaseous form. The second quantity of thermal energy 108 is greater than the first quantity of thermal energy 106. A gaseous fuel flow 110 is communicated to the core engine 25.

The fuel flow path 82 includes a primary flow path 84 that is used during steady state engine operation. A secondary fuel flow path 86 directs fuel to the engine start system 60. The secondary fuel flow path 86 includes a first stage path 88 and a second stage path 90. A valve system 96 controls fuel flow into each of the first stage path 88 and the second stage path 90. In one example embodiment, the valve system 96 includes a first valve 98 and a second valve 100.

In one disclosed example, the first stage 92 includes a blower 114 driven by a motor 116 to generate an airflow 118. Cryogenic fuels are in a gaseous form at temperatures in a typical ambient environment. Accordingly, the ambient temperature airflow 118 is sufficient to boil a cryogenic liquid fuel into a gaseous form and generate the first quantity of thermal energy 106.

The second stage 94 uses the first portion of gaseous fuel generated in the first stage 92 to generate the second quantity of thermal energy 108. In one disclosed embodiment, the second stage 94 is one of a fuel cell, burner, or chemical reactor. The first quantity of fuel 102 provides the input to the second stage 94 to produce a much higher quantity of thermal energy 108 that is capable of generating a larger amount of gaseous fuel flow. The second portion of liquid fuel flow 104 within the second stage fuel path 90 becomes a gaseous flow 110 after input of the second quantity of thermal energy 108. In one example embodiment, the gaseous fuel flow 110 is directed into the primary fuel flow path 84 toward the combustor section 26.

A controller 112 is provided and programmed to operate the valve system 96, the first stage 92 and the second stage to generate the gaseous fuel flow 72 needed during engine start-up. The example controller 112 is a device and system for performing necessary computing or calculation operations for the engine start system 60. In one example embodiment, the controller 112 is programmed to operate the first valve 98, the second valve 100, the motor 116 that drives the blower 114 and the second stage 94 to generate the gaseous fuel flow 110 for starting the engine. Moreover, the controller 112 is programmed to operate other control devices based on predetermined commands and/or information from sensors disposed within the engine and aircraft.

The controller 112 may be specially constructed for operation of the start system 60, or it may comprise at least a general-purpose computer selectively activated or reconfigured by software instructions stored in the memory device. The controller 112 may further be part of full authority digital engine control (FADEC) or an electronic engine controller (EEC).

Once the engine is started and is producing heat 68 to support steady state operation of the core engine 25, the controller 112 shuts down the engine start system 60. Any residual fuel or heat may be communicated into the fuel flow until exhausted.

In one example operational embodiment of the engine start system 60, liquid fuel is communicated through the first stage path 88 for heating by the first stage 92. The first stage 92 is operated to generate the first quantity of thermal energy 106 that is input into the liquid fuel flow to generate the first portion of gaseous fuel flow 102. The first portion of gaseous fuel flow 102 is not of a quantity desired to operate the core engine 25. Instead, the first portion of gaseous fuel flow 102 is generated at a quantity to operate the second stage 94. The amount of fuel flow generated in controlled by the controller 112 through operation of the valve system 96.

In the second stage 94, the gaseous fuel flow 102 is used to generate the second quantity of thermal energy 108. The second quantity of thermal energy 108 is greater than that generated by the first stage 92. The controller 112 operates the valve system 96 to provide a liquid flow through the second stage fuel path 90 that generates a gaseous fuel flow determined to start the core engine 25. In the disclosed example, the gaseous fuel flow 110 represents a quantity of transformed gaseous fuel flow determined to provide for starting of the core engine 25.

In one example embodiment, the second stage 94 is a burner where the gaseous fuel flow 102 is mixed with air and ignited to generate the second quantity of thermal energy 108. In another example embodiment, the second stage 94 is a fuel cell that uses the gaseous fuel flow 102 to produce electricity in addition to the thermal energy 108. In still another example embodiment, the second stage 94 is a chemical reactor that includes a catalyst or other chemical compound or mixture that generates thermal energy upon interaction with the gaseous fuel flow 102.

Residual heat from the first stage 92 may be communicated into the second stage 94 to supplement the production of heat to transform the fuel into a gaseous form. Although examples of the first stage and the second stage have been disclosed by way of example, other heat producing devices and systems may be utilized for either of the first stage and the second stage. Moreover, although two stages are disclosed, additional stages could be utilized and are within the contemplation of this disclosure.

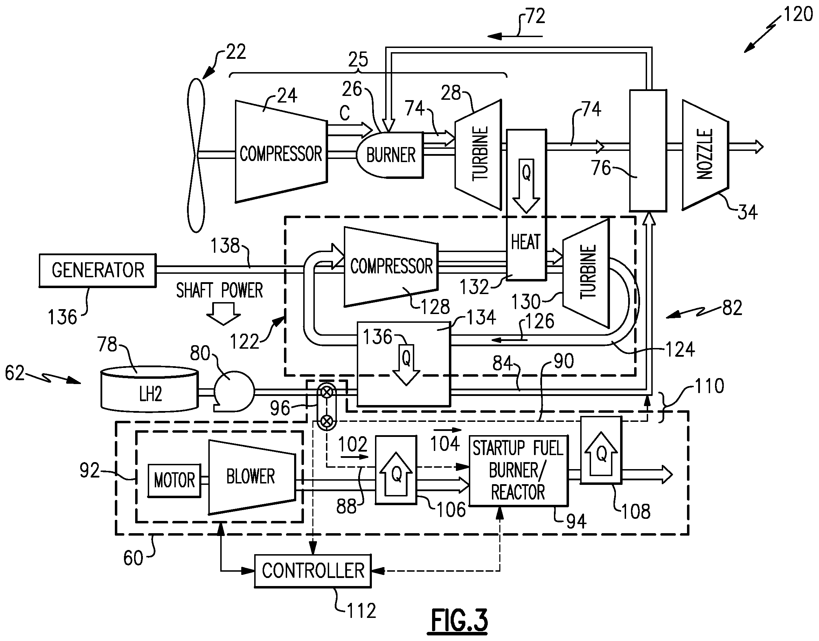

Referring to Figure 3, another example aircraft propulsion system 120 is schematically shown and includes a bottoming cycle system 122 to recover heat energy during steady state operation of the core engine 25. The example engine start system 60 includes the same or similar features and operates as explained above to generate the gaseous fuel flow 110 utilized to start the core engine 25.

The bottoming cycle system 122 includes a closed circuit 124 where a working fluid 126 flows through a bottoming compressor 128 and a turboexpander 130. The bottoming cycle system 122 operates to provide thermal energy 136 to the fuel in a working fluid/fuel heat exchanger 134 during steady state engine operation. A first heat exchanger 132 transfers heat energy from the exhaust gas flow 74 into the working fluid flow 126. The heated working fluid flow 126 is expanded through the turboexpander 130 to drive a shaft 138. The shaft 138 may be coupled to drive the bottoming compressor 128 and a generator 136. The expanded working fluid 126 exhausted from the turboexpander 130 transfers heat energy 136 into the fuel flow through the heat exchanger 134. Working fluid 126 that is exhausted from the heat exchanger 134 is pressurized in the bottoming compressor 128 and reheated in the first heat exchanger 132.

The fuel flow within the primary fuel path 84 is further heated within a second heat exchanger 76 by the exhaust gas flow 74. The fuel flow 72 exhausted from the second heat exchanger 76 is a heated gaseous flow that is injected into the combustor section 26 and ignited to generate the exhaust gas flow 74.

The example controller 112 may be further programmed to operate the bottoming cycle system 122 to produce power and tailor operation to engine operating conditions. Although the example bottoming cycle system 122 is disclosed as driving a generator 136, other devices may be driven by the turboexpander 130. Moreover, the shaft 138 may be selectively coupled to one of the engine shafts to supplement engine power.

Accordingly, the example engine start system provides for the conditioning of cryogenic liquid fuels for combustion prior to steady state operation and generation of thermal energy by the core engine.

Although embodiments of this disclosure have been shown, a worker of ordinary skill in this art would recognize that modifications would come within the scope of this invention. For that reason, the following claims should be studied to determine the true scope of the invention.

## Claims

1. An aircraft propulsion system (20) comprising:
a core engine (25) comprising a combustor (26) configured to ignite a mixture of a fuel and compressed air to generate an exhaust gas flow (74);
a propulsive fan (22) configured to be driven by shaft power generated by the core engine (25);
a cryogenic fuel system (62) comprising a cryogenic fuel storage tank (78) and a fuel flow path (82, 84, 86) for routing the fuel to the combustor (26) of the core engine (25);
an engine start system (60) comprising a first stage (92) configured to generate a first quantity of thermal energy (106) for heating a first portion of fuel (102) and a second stage (94) configured to utilize the heated first portion of fuel (102) to generate a second quantity of thermal energy (108) for heating a second portion of fuel (104), wherein the second quantity of thermal energy (108) is greater than the first quantity of thermal energy (106) and the second portion of fuel (104) is communicated to the core engine (25).

2. The aircraft propulsion system (20) as recited in claim 1, wherein the fuel flow path (82, 84, 86) comprises a primary fuel path (84) configured to direct fuel to the combustor (26) and a secondary fuel path (86) configured to direct fuel to the engine start system (60).

3. The aircraft propulsion system (20) as recited in claim 2, further comprising a valve system (96) for controlling fuel flow between the primary fuel path (84) and the secondary fuel path (86).

4. The aircraft propulsion system (20) as recited in claim 2 or 3, wherein the secondary fuel path (86) further comprises a first stage path (88) configured to direct fuel to the to the first stage (92) and a second stage path (90) configured to direct fuel to the second stage (94).

5. The aircraft propulsion system (20) as recited in claim 3 or 4, further comprising a controller (112) programed to operate the valve system (96) and the engine start system (60) for starting the core engine (25).

6. The aircraft propulsion system (20) as recited in any of claims 2 to 5, further comprising a bottoming cycle system (122) configured to recover thermal energy (136) from the core engine (25) and to utilize the recovered thermal energy (136) to heat a portion of fuel flow within the primary fuel path (84).

7. The aircraft propulsion system (20) as recited in claim 6, wherein:
the bottoming cycle system (122) further comprises a closed circuit (124) configured to compress a working fluid (126) with a bottoming compressor (128), heat the working fluid (126), and expand the working fluid (126) through a turboexpander (130) ; and, optionally, the turboexpander (130) is coupled to drive the bottoming compressor (128).

8. A gas turbine engine assembly comprising:
a compressor (24), a combustor (26) and a turbine (28) coupled to an engine shaft, wherein the combustor (26) is configured to ignite a mix of air and fuel to generate an exhaust gas flow (74), the turbine (28) is configured to expand the exhaust gas flow (74) therethrough to drive the engine shaft, and an exhaust nozzle (34) is configured to exhaust the exhaust gas flow (74);
a propulsive fan (22) driven by shaft power generated by the turbine (28);
a cryogenic fuel system (62) comprising a cryogenic fuel storage tank (78) and a fuel flow path (82) for routing the fuel to the combustor (26);
an engine start system (60) comprising a first stage (92) configured to generate a first quantity of thermal energy (106) for heating a first portion of fuel (102) and a second stage (94) configured to utilize the heated first portion of fuel (102) to generate a second quantity of thermal energy (108) for heating a second portion of fuel (104), wherein the second quantity of thermal energy (108) is greater than the first quantity of thermal energy (106) and the second portion of fuel (104) is communicated to the combustor (26);
a bottoming cycle (122) configured to recover thermal energy (136) and to utilize the recovered thermal energy (136) to heat a portion of fuel flow within the fuel flow path (82); and
a controller (112) programed to operate the engine start system (60) to generate a vaporized fuel flow for injection into the combustor (26) and to turn off the engine start system (60) and turn on the bottoming cycle (122) in response to the generation of shaft power by the turbine.

9. The gas turbine engine assembly as recited in claim 8, wherein the fuel flow path (82, 84, 86) comprises a primary fuel path (84) configured to direct fuel to the combustor (26) and a secondary fuel path (86) configured to direct fuel to the engine start system (60).

10. The gas turbine engine assembly as recited in claim 9, wherein the secondary fuel path (86) further comprises a first stage path (88) configured to direct fuel to the first stage (92) and a second stage path (90) configured to direct fuel to the second stage (94).

11. The gas turbine engine assembly as recited in claim 9 or 10, further comprising a valve system (96) for controlling fuel flow between the primary fuel path (84) and the secondary fuel path (86), wherein the controller (112) is further programmed to operate the valve system (96) to control fuel flow through each of the primary fuel path (84) and the secondary fuel paths (86).

12. The aircraft propulsion system (20) or the gas turbine engine assembly as recited in any preceding claim, wherein:
the first stage (92) comprises one of an electric heater and/or a blower (114) for heating the first portion of fuel; and/or
the second stage (94) comprises one of a fuel cell, a burner, or a chemical reactor configured to utilize the first portion of fuel to generate the second quantity of thermal energy (108) ; and/or
the system or assembly is configured to communicate any remaining portion of the first quantity of thermal energy (106) generated in the first stage (92) to the second stage (94) to heat the second portion of fuel.

13. A method of assembling an aircraft propulsion system (20) comprising
assembling a core engine (25) comprising a combustor (26) configured to ignite a mixture of a fuel and compressed air to generate an exhaust gas flow (74);
assembling a propulsive fan (22) configured to be driven by shaft power generated by the core engine (25);
assembling a cryogenic fuel system (62) to comprise a cryogenic fuel storage tank (78), and a fuel flow path (82) for routing the fuel to the combustor (26); and
assembling an engine start system (60) comprising a first stage (92) configured to generate a first quantity of thermal energy (106) for heating a first portion of fuel and a second stage (94) configured to utilize the heated first portion of fuel (102) to generate a second quantity of thermal energy (108) for heating a second portion of fuel (104) such that the second quantity of thermal energy (108) is greater than the first quantity of thermal energy (106), wherein the system is configured to communicate the second portion of fuel (104) to the core engine (25).

14. The method as recited in claim 13, further comprising assembling the fuel flow path (82) to comprise a primary fuel path (84) configured to direct fuel to the combustor (26) and a secondary fuel path (86) configured to direct fuel to the engine start system (60), wherein the secondary fuel path (86) further comprises a first stage path (88) configured to direct fuel to the to the first stage (92) and a second stage path (90) configured to direct fuel to the second stage (94).

15. The method as recited in claim 14, further comprising:
assembling a valve system (96) configured to control fuel flow between the primary fuel path (84) and the secondary fuel path (86) and assembling a controller (112) programmed to operate the valve system (96) and the engine start system (60) to control fuel flow through each of the primary fuel path (84) and the secondary fuel path (86); and/or
assembling a bottoming cycle (122) configured to recover thermal energy (136) from the core engine (25) and to utilize the recovered thermal energy (136) to heat a portion of fuel flow within the primary fuel path (84).
